# EUROPÄISCHE PATENTSCHRIFT

(11) **EP 1 551 670 B1**
(45) Veröffentlichungstag und Bekanntmachung des Hinweises auf die Patenterteilung: **11.11.2009**
(21) Anmeldenummer: 03797953.1
(22) Anmeldetag: 30.05.2003
(51) Int. Cl.: B60R 21/01

(54) **VERFAHREN ZUR AUSLÖSUNG EINES RÜCKHALTESYSTEMS IN EINEM FAHRZEUG**
METHOD FOR ACTIVATING A RESTRAINT SYSTEM IN A VEHICLE
PROCEDE DE DECLENCHEMENT D'UN SYSTEME DE RETENUE DANS UN VEHICULE

(30) Priorität: 01.10.2002 DE 10245781
(43) Veröffentlichungstag der Anmeldung: 13.07.2005
(73) Patentinhaber: ROBERT BOSCH GMBH, 70442 Stuttgart (DE)
(72) Erfinder: THEISEN, Marc, 71634 Ludwigsburg (DE)
(86) Internationale Anmeldenummer: PCT/DE2003/001775
(87) Internationale Veröffentlichungsnummer: WO 2004/030999

(56) Entgegenhaltungen:
- US-A- 5 014 810
- US-A- 5 394 328
- US-A- 5 587 906
- US-B1- 6 199 903
- US-B1- 6 278 924

## Beschreibung

### Stand der Technik

Die Erfindung geht aus von einem Verfahren zur Auslösung eines Rückhaltesystems in einem Fahrzeug nach der Gattung des unabhängigen Patentanspruchs.

Aus der Offenlegungsschrift DE 19724101 A1 ist ein Verfahren zur Auslösung eines Rückhaltesystems in einem Fahrzeug bekannt. Dabei wird aus der Aufprallgeschwindigkeit die Crash-Schwere abgeschätzt, Fahrzeugsteifigkeitsdaten werden berücksichtigt, wobei die Auslösung letztlich in Abhängigkeit von einem Vergleich einer Schwellenfunktion und einem Beschleunigungssignal oder einer davon abgeleiteten Größe erfolgt. Die Schwellenfunktion bestimmt sich nach einer Auslösecharakteristik, die selbst aus Crash-Versuchen für das jeweilige Fahrzeug bestimmt wurde.

Das Dokument US-A-6 278 924 offenbart ein Verfahren zur Auslösung eines Rüchhaltesystems gemäß dem Oberbegriff des Anspruchs 1.

### Vorteile der Erfindung

Das erfindungsgemäße Verfahren zur Auslösung eines Rückhaltesystems in einem Fahrzeug mit den Merkmalen des unabhängigen Patentanspruchs hat dem gegenüber den Vorteil, dass die Auslösezeiten für schnelle und harte Crashs entsprechend den Anforderungen besser getroffen werden, wobei insbesondere die Übertragbarkeit von Auslöseverhalten auf Crash-Typen oder Unfalltypen mit weniger Crashtests gewährleistet ist. Der Kern des Verfahrens besteht darin, dass es abhängig vom Fahrzeug eine Geschwindigkeitsgrenze G gibt, ab der eine lineare Regressionsgerade das Auslöseverhalten des Airbags nicht mehr gut beschreibt. Diese linearen Regressionsgeraden werden durch Crash-Tests gefunden und in einem Geschwindigkeitsauslösezeitdiagramm eingetragen. Darüber hinaus gibt es eine vom Fahrzeug abhängige Geschwindigkeit, ab der das Rückhaltemittel ohne detaillierte Unterscheidung zwischen den Unfall- oder Crash-Typ entweder zu einem fest gegebenen Zeitpunkt gezündet wird oder gar nicht ausgelöst wird. Das erfindungsgemäße Verfahren ermöglicht es, das Auslöseverhalten aus der Kenntnis des Auslöseverhaltens im unteren Geschwindigkeitsbereich in den Geschwindigkeitsbereich zu übertragen, der zwischen der Geschwindigkeitsgrenze G und der Geschwindigkeit P liegt. Dies bezeichnet beispielsweise einen Geschwindigkeitsbereich zwischen 70 und 130 km/h.

Durch die in den abhängigen Ansprüchen aufgeführten Maßnahmen und Weiterbildungen sind vorteilhafte Verbesserungen des im unabhängigen Patentanspruchs angegebenen Verfahrens zur Auslösung eines Rückhaltesystems möglich.

Besonders vorteilhaft ist, dass die Auslösecharakteristik zwischen dem ersten und dem zweiten Aufprallgeschwindigkeitswert linear verläuft. Die Crash-Tests, die beispielsweise bei 15, 20, 25 bis 70 km/h durchgeführt werden, führen zu einer Auslösecharakteristik mit einem linearen Verhalten. Unter einer Auslösecharakteristik versteht man diejenige Funktion, die für einen gegebenen Crash-Typ den Zusammenhang zwischen Aufprallgeschwindigkeit und Auslösezeit definiert. Dabei kann jeder Crash-Typ eine eigene Auslösecharakteristik besitzen. Die Auslösecharakteristiken können sich aus den Anforderungen des Fahrzeugherstellers ergeben. Diese Anforderungen legen fest, wann bei einem Crash auf eine gegebenen Barriere mit einer bestimmten Aufprallgeschwindigkeit das Rückhaltemittel, beispielsweise ein Airbag oder ein Gurtstraffer, ausgelöst werden soll. Unter Crash- oder Unfalltyp werden hier beispielsweise ein Frontalaufprall, ein Offset-Crash, ein Seitenaufprall, ein Heckaufprall, ein Aufprall auf eine harte Barriere, ein Aufprall auf eine weiche Barriere und ein Pfahl-Crash sowie ein Überrollvorgang verstanden. Der Unfalltyp bezeichnet also die Art des Unfalls.

Weiterhin ist es von Vorteil, dass ab dem zweiten Aufprallgeschwindigkeitswert (P) eine feste Auslösezeit verwendet wird. Ab dieser Aufprallgeschwindigkeit ist der Crash so hart, dass das Rückhaltemittel oder die Rückhaltemittel sofort ausgelöst werden müssen.

Schließlich ist es auch vorteilhaft, dass eine Vorrichtung zur Auslösung eines Rückhaltesystems mit dem erfindungsgemäßen Verfahren vorgeschlagen wird, die insbesondere ein Steuergerät beinhaltet, das mit den entsprechenden Sensoren, beispielsweise einer Precrash-Sensorik zur Erfassung der Aufprallgeschwindigkeit und einer Inertialsensorik zur Erkennung der Beschleunigung bei einem Crash verbunden ist. Das Steuergerät wird dann das Rückhaltesystem entsprechend ansteuern.

### Zeichnungen

Ausführungsbeispiele der Erfindung sind in der Zeichnung dargestellt und werden in der nachfolgenden Beschreibung näher erläutert.

Es zeigen:
- Figur 1: ein Blockschaltbild der erkennungsgernäßen Vorrichtung,
- Figur 2: ein Aufprallgeschwindigkeitsauslösezeitdiagramm und
- Figur 3: ein weiteres Aufprallgeschwindigkeitsauslösezeitdiagramm.

### Beschreibung

Zur Steuerung von Rückhaltemitteln in einem Fahrzeug wird das Signal von einem Beschleunigungssensor oder mehreren Beschleunigungssensoren ausgewertet. Zu diesem Signal werden die Werte von Signalmerkmalen bestimmt. Diese Werte werden mit einer Schwelle oder einer Schwellenfunktion verglichen und falls sie diese Schwelle überschreiten, wird das Rückhaltemittel, beispielsweise ein pyrotechnischer Gurtstraffer oder ein Airbag erster oder zweiter Stufe, ausgelöst. Bei Fahrzeugen, die über eine Sensorik zur Messung der Aufprallgeschwindigkeit verfügen, kann diese Schwelle von der Aufprallgeschwindigkeit abhängig gewählt werden. Die Ausprägung der Schwellenfunktion ist von der Charakteristik des Fahrzeugs abhängig. Um die Schwellenfunktion aufstellen zu können, wird ein in der Geschwindigkeitauslösezeitebene liegendes Gitter benötigt. Punkte des Gitters werden als Stützstellen benutzt, mit denen die Schwellwerte festgelegt werden. Dieses Gitter ergibt sich aus den im Folgenden erläuterten Auslösecharakteristiken zu bestimmten Geschwindigkeiten, wobei beispielsweise die Geschwindigkeit 15, 20, 25, ...., 70 km/h ist. Wie oben dargestellt, bestimmen sich die Auslösecharakteristiken bei dem aktuell eingesetzten System durch lineare Regressionsgeraden. Diese Geraden ergeben sich aus der für einen gefahrenen Crash-Test vom Fahrzeughersteller geforderten Auslösezeit. Die linearen Regressionsgeraden beschreiben das geforderte Auslöseverhalten gut in dem Geschwindigkeitsbereich, in dem die Crash-Tests gefahren werden. Weniger gut wird das Verhalten im darüber liegenden Geschwindigkeitsbereich, also beispielsweise für die Geschwindigkeiten zwischen 70 und 130 km/h und für schnelle, sehr harte Crashs beschrieben, wenn die Regressionsgerade sehr kurze Auslösezeiten, beispielsweise kürzer als 5 ms, vorgibt.

Das Auslöseverhalten in diesen Crash-Situationen wird beispielsweise durch eine 1/x-Funktion oder durch eine exponentiell abfallende Funktion besser beschrieben. Für diese Funktionen kann für die Crash-Typen mit vielen Crash-Tests genau wie für die lineare Funktion einer Regressionsanalyse durchgeführt werden. Der Nachteil dieser Funktionen gegenüber der linearen besteht darin, dass diese Funktionen schlechter auf die Crash-Typen mit weniger Crash-Tests verallgemeinert werden können.

Erfindungsgemäß ist es nun vorgesehen, dass abhängig vom Fahrzeug eine Geschwindigkeitsgrenze G vorgegeben wird, ab der die lineare Regressionsgerade das Auslöseverhalten des Airbags nicht mehr gut beschreibt. Desweiteren gibt es eine vom Fahrzeug abhängige Geschwindigkeit P, ab der das Rückhaltemittel ohne detaillierte Unterscheidung zwischen den verschiedenen Crash-Typen entweder zu einem festgegebenen frühen Zeitpunkt gezündet wird oder gamicht ausgelöst wird. Das hier beschriebene Verfahren ermöglicht es, das Auslöseverhalten aus der Kenntnis des Auslöseverhaltens im unteren Geschwindigkeitsbereich in den Geschwindigkeitsbereich zu übertragen, der zwischen der Geschwindigkeitsgrenze G und der Geschwindigkeit P liegt.

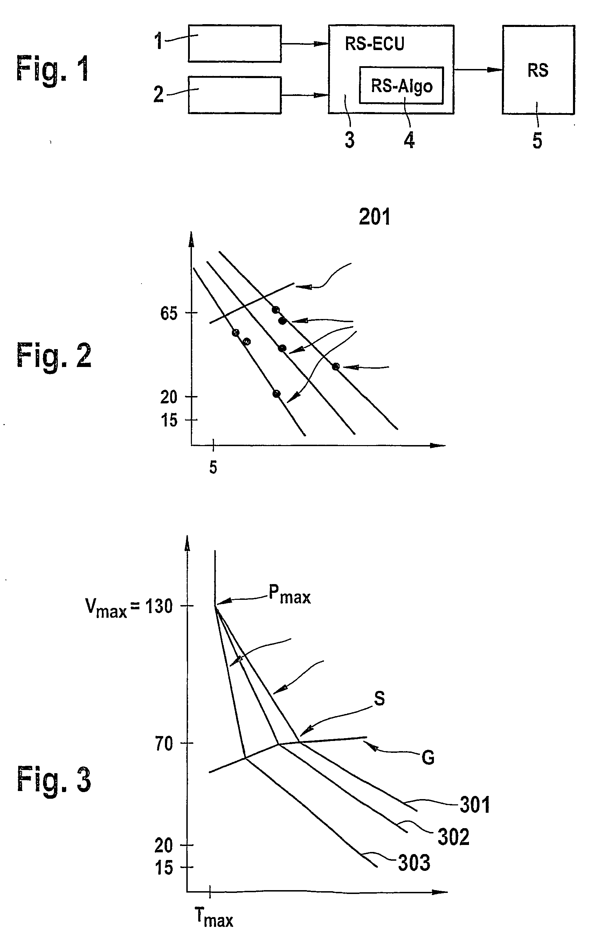

Figur 1 zeigt die erfindungsgemäße Vorrichtung als Blockschaltbild. Ein Umfeldsensor 1 ist an ein Steuergerät 3 über einen ersten Dateneingang angeschlossen. Weiterhin ist ein Beschleunigungssensor 2 an das Steuergerät 3 an einen zweiten Dateneingang angeschlossen. Dem Steuergerät 3 ist ein Prozessor 4 zugeordnet, auf dem ein Algorithmus zur Berechnung der Auslösezeiten eines Rückhaltemittels abläuft. Es ist möglich, dass daneben weitere Algorithmen zur Steuerung anderer Rückhaltemittel abgearbeitet werden. Über einen Datenausgang ist das Steuergerät 3 mit Rückhaltemitteln 5 verbunden. Diese Rückhaltemittel 5 sind beispielsweise Airbags, Gurtstraffer oder ein Überrollbügel und bilden somit das Rückhaltesystem. Die Ansteuerung für die Rückhaltemittel 5_kann entweder in dem Steuergerät 3 oder in einem weiteren Steuergerät für die Rückhaltemittel erfolgen. Beispielhaft sind hier jeweils nur ein Umfeldsensor 1 und ein Beschleunigungssensor 2 erwähnt. Es können jedoch mehr als ein Umfeldsensor und mehr als ein Beschleunigungssensor benutzt werden. Der Umfeldsensor 1 ist beispielsweise ein Radar- oder Ultraschallsensor oder ein optischer Sensor. Der Beschleunigungssensor 2 dient als Aufprallsensor, der die aus dem Aufprall resultierende Beschleunigung ermittelt.

Die im Folgenden dargestellte Methode zur Bestimmung der Auslösecharakteristiken ist Grundlage für den im Steuergerät 3 ablaufenden Algorithmus. Voraussetzung für diese Methode ist, dass die für den unteren bzw. mittleren Geschwindigkeitsbereich gültigen Auslösecharakteristiken bezüglich den betrachteten Crash-Typ gegeben sind. Abhängig vom Fahrzeugtyp gibt es eine Grenze G, ab der die linearen Auslösecharakteristiken das Auslöseverhalten für höhere Geschwindigkeiten nur unzureichend beschreiben. Die Lage der Grenze G ist desweiteren vom Crash-Typ abhängig. Sie kann somit beispielsweise als gerader Polygonzug oder sonstige beliebige mathematische Funktion in der Geschwindigkeitsauslösezeitebene dargestellt werden. Diese Grenze kann beispielsweise so gewählt werden, dass sie im Wesentlichen oberhalb der vom Fahrzeughersteller durchgeführten Crash-Tests liegt. Für Geschwindigkeiten unterhalb dieser Grenze beschreiben die linearen Auslösecharakteristiken das Auslöseverhalten gut. Weiterhin gibt es eine vom Fahrzeug abhängige Geschwindigkeit Vₘₐₓ, ab der das zu steuernde Rückhaltemittel unabhängig vom Crash-Typ entweder zu einem fest gegebenen, frühen Zeitpunkt gezündet oder gar nicht ausgelöst wird. Ab dieser Geschwindigkeit Vₘₐₓ gibt es also nur diesen Zeitpunkt Tₘₐₓ zur Auslöseentscheidung und kein echtes Zeitintervall wie bei den niedrigeren Geschwindigkeiten. Für den Geschwindigkeitsbereich, der zwischen diesem Punkt Pₘₐₓ und der zuvor beschriebenen Grenze G liegt, können die Auslösecharakteristiken für jeden Crash-Typ, beispielsweise wie folgt festgelegt werden: Man wählt eine Gerade zwischen Pₘₐₓ und dem Schnittpunkt S_{Crash-Typ}. Der Punkt S_{Crash-Typ} ergibt sich als Schnittpunkt zwischen der Grenze G und der Auslösecharakteristik im unteren Geschwindigkeitsbereich für den betrachteten Crash-Typ.

In den Auslösecharakteristiken aus dem unteren Geschwindigkeitsbereich ist Wissen repräsentiert, das aus den Daten der Crash-Tests extrahiert worden ist. Da die Auslösecharakteristiken zur Definition der Schnittpunkte S_{Crash-Typ} verwendet werden, wird das aus den Crash-Tests extrahierte Wissen auf den oberen Geschwindigkeitsbereich verallgemeinert. Desweiteren erlaubt dieser abschnittsweise lineare Ansatz, dass die Auslösecharakteristiken auch auf Crash-Typen mit weniger vorliegenden Crash-Tests verallgemeinert werden können. Außerdem hat dieser abschnittsweise Ansatz den Vorteil, dass die Auslösecharakteristiken für den höheren Geschwindigkeitsbereich steiler als für den niedrigeren gewählt werden können. Damit entspricht der Verlauf besser dem idealen, zunächst steilen, dann flacher werdenden Verlauf. Das erfindungsgemäße Verfahren stellt also einen optimalen Kompromiss zwischen der Übertragbarkeit auf andere Crash-Typen und der Qualität der Beschreibung des Auslöseverhaltens dar.

Figur 2 zeigt in einem Geschwindigkeitsauslösezeitdiagramm die Regressionsgeraden, die die Auslösecharakteristiken beschreiben und verschiedene Crash-Tests festgelegt werden. Auf der Abszesse ist die Auslösezeit in ms aufgetragen, während auf der Ordinate die Aufprallgeschwindigkeit in km/h angegeben ist. Es sind hier drei lineare Regressionsgeraden gezeigt, die durch jeweils Messpunkte für Crash-Tests gezogen wurden. Ab der Grenze 201 sind die Auslösecharakteristiken, die durch die Regressionsgeraden definiert sind, nicht mehr gültig, da hier die Aufprallgeschwindigkeit derart ist, dass ein anderes Verhalten vorliegt. Hier sind wesentlich kürzere Auslösezeiten vorzusehen.

Figur 3 zeigt nun in einem weiteren Geschwindigkeitsauslösezeitdiagramm die Verwendung der erfindungsgemäßen Aufprallgeschwindigkeitswerte, um das Auslöseverhalten entsprechend zu steuern. Wiederum ist auf der Abszisse die Auslösezeit in ms angegeben, während auf der Ordinate die Aufprallgeschwindigkeit in km/h angegeben ist. Für drei Unfalltypen sind hier drei Regressionsgeraden 301, 302 und 303 angegeben. Sobald sie sich mit der Kurve G schneiden, die die Geschwindigkeitsgrenze festlegt, ab der diese Regressionsgeraden das geforderte Auslöseverhalten nicht mehr hinreichend genau beschreiben, ändert sich die Steigung der einzelnen Regressionsgeraden. Die Steigung ändert sich so, dass sie sich beim Punkt Pₘₐₓ, der hier beispielsweise bei 130 km/h liegt, treffen, ab dieser Geschwindigkeit ist eine feste Auslösezeit vorgegeben. Der Bereich zwischen der Geschwindigkeitsgrenze G und dem Punkt Pₘₐₓ für die einzelnen Regressionsgeraden kann auch durch andere Kurven interpoliert werden, die jedoch dann einen größeren Rechenaufwand bedeuten. Die linke Regressionsgerade beschreibt die früheste Auslösecharakteristik, während die rechte Regressionsgerade 301 die späteste Auslösecharakteristik angibt.

## Patentansprüche

1. Verfahren zur Auslösung eines Rückhaltesystems (5) in einem Fahrzeug, wobei das Rückhaltesystem (5) in Abhängigkeit von einer Auslösecharakteristik und wenigstens einer von einem Beschleunigungssignal abgeleiteten Größe ausgelöst wird, indem die wenigstens eine Größe einer Schwellenfunktion überschreitet, die in Abhängigkeit von der Aufprallgeschwindigkeit und einer geforderten Auslösezeit eingestellt wird, **dadurch gekennzeichnet, dass** die jeweilige Auslösecharakteristik für einen jeweiligen Unfalltyp bis zu einem ersten Aufprallgeschwindigkeitswert (G) linear mit einer ersten Steigung verläuft und zwischen dem ersten Aufprallgeschwindigkeitswert (G) und einem zweiten Aufprallgeschwindigkeitswert (Pₘₐₓ) mit wenigstens einer zweiten Steigung verläuft, wobei der erste und der zweite Aufprallgeschwindigkeitswert (G, Pₘₐₓ) vom jeweiligen Fahrzeugtyp abhängen.

2. Verfahren nach Anspruch 1, **dadurch gekennzeichnet, dass** die Auslösecharakteristik zwischen dem ersten und dem zweiten Aufprallgeschwindigkeitswert (G, Pₘₐₓ) linear verläuft.

3. Verfahren nach Anspruch 1 oder 2, **dadurch gekennzeichnet, dass** ab dem zweiten Aufprallgeschwindigkeitswert (Pₘₐₓ) eine feste Auslösezeit (Tₘₐₓ) verwendet wird.

4. Verwendung einer Vorrichtung zur Auslösung eines Rückhaltesystems nach einem der Ansprüche 1 bis 3.

## Claims

1. Method for triggering a restraint system (5) in a vehicle, wherein the restraint system (5) is triggered as a function of a triggering characteristic and at least one variable derived from an acceleration signal in that the at least one variable exceeds a threshold function which is set as a function of the impact speed and a requested triggering time, **characterized in that** the respective triggering characteristic for a respective type of accident extends linearly with a first gradient up to a first impact speed value (G), and extends with at least one second gradient between the first impact speed value (G) and a second impact speed value (Pₘₐₓ), wherein the first and second impact speed values (G, Pₘₐₓ) depend on the respective type of vehicle.

2. Method according to Claim 1, **characterized in that** the triggering characteristic extends linearly between the first and second impact speed values (G, Pₘₐₓ).

3. Method according to Claim 1 or 2, **characterized in that** a fixed triggering time (Tₘₐₓ) is used starting from the second impact speed value (Pₘₐₓ).

4. Use of a device for triggering a restraint system according to one of Claims 1 to 3.

## Revendications

1. Procédé de déclenchement d'un système de retenue (5) prévu dans un véhicule, le système de retenue (5) étant déclenché en fonction d'une caractéristique de déclenchement et d'au moins une grandeur dérivée d'un signal d'accélération lorsque la ou les grandeurs dépassent une fonction de seuil qui est réglée en fonction de la vitesse de collision et d'une durée de déclenchement imposée,
**caractérisé en ce que**
chaque caractéristique de déclenchement dans le cas d'un type particulier d'accident évolue linéairement avec une première pente jusqu'à une première valeur (G) de vitesse de collision et avec au moins une deuxième pente entre la première valeur (G) de vitesse de collision et une deuxième valeur de vitesse de collision (Pₘₐₓ), la première et la deuxième valeur (G, Pₘₐₓ) de vitesse de collision dépendant de type particulier de véhicule.

2. Procédé selon la revendication 1, **caractérisé en ce que** la caractéristique de déclenchement s'étend linéairement entre la première et la deuxième valeur (G, Pₘₐₓ) de vitesse de collision.

3. Procédé selon les revendications 1 ou 2, **caractérisé en ce qu'**à partir de la deuxième valeur (Pₘₐₓ) de vitesse de collision, il utilise une durée de déclenchement fixe (Tₘₐₓ).

4. Utilisation d'un dispositif de déclenchement de système de retenue selon l'une des revendications 1 à 3.
